# EUROPEAN PATENT SPECIFICATION

(11) **EP 1 854 549 B1**
(45) Date of publication and mention of the grant of the patent: **09.12.2009**
(21) Application number: 07290599.5
(22) Date of filing: 11.05.2007
(51) Int. Cl.: B05B 17/06

(54) **Optical lens coating apparatus and method**
Vorrichtung und Verfahren zur Beschichtung einer optischen Linse
Appareil et procédé de revêtement de lentille optique

(30) Priority: 12.05.2006 US 433273
(43) Date of publication of application: 14.11.2007
(73) Proprietor: Essilor International, 94220 Charenton Le Pont (FR)
(72) Inventor: Mosse, Herbert, Lutz, FL 33548 (US)
(74) Representative: Lepelletier-Beaufond, François

(56) References cited:
- US-A- 5 753 301
- US-A1- 2004 142 105
- US-A1- 2004 247 886

## Description

### 1. TECHNICAL FIELD

The present invention relates to a method for coating an optical lens, and in particular, to an improved system and method for coating a segmented multifocal lens.

### 2. DESCRIPTION OF RELATED ART

Optical lenses are typically manufactured from polycarbonate due to the myriad of advantages such material offers which makes it ideally suited for optical use. Namely, polycarbonate possesses a high index of refraction, blocks all UVA and UVB radiation, is an ideal candidate for injection molding processes, is easily drilled (e.g., for securing to eye frames), and is lightweight and highly impact resistant. However, polycarbonate in untreated form is a relatively soft material vulnerable to scratches and other surface insults. When a lens is scratched or otherwise damaged, the optical properties of the lens are negatively affected. Various methodologies for imparting scratch resistance to polycarbonate lenses are known, among them the application or integration of scratch-resistant coatings to the lens itself.

With lenses having uniform, smooth surfaces, application of such coatings is typically effectively achieved via straightforward methods such as dip coating the lens into a coating composition. Uniform coating distribution may accordingly be achieved on such lenses in a relatively simple manner with satisfactory results.

Certain lenses having irregular surfaces, e.g., typically lenses designed to offer more than one focal point or lens power (multifocal lenses) within each lens, are often configured such that the area of the lens that offers a separate focal distance is segmented and projects away from at least one major optical surface of the lens. Such segmented lenses may include, e.g., a raised or protruding area (segment) which is elevated from the rest of the lens area, and thus have a segment line or ridge separating the powers. Segmented lenses thus have a non-uniform surface profile. Straight top bifocal lenses are one example, having a "D" shaped segment dedicated to a particular focal distance with a straight top protruding edge. Currently, straight top lenses are coated by means of, e.g., dip coating or a complex process of centering the straight top edge in the middle of a spin coater while dispensing a coating material at a precise location and time during the spin process.

Coating solutions applied to these optical surfaces must flow around and over these segments. However, both dip coating and spin coating methods when used with segmented lenses often produce undesirable results, namely, the occurrence of drip lines, flow marks, or bubbling at the protruding edges. In addition, such methods do not allow for a thicker hard coating. Lack of sufficient coating thickness tends to lead to poorer mechanical values and reduced durability.

U.S. Patent 4,544,572 describes coating of ophthalmic lenses via application of a coating solution to a mold surface. It specifically mentions characterized in that if a mold is designed for the production of multifocal lenses having a straight segment line (e.g., a flat top lens), the face containing the multifocal portion is positioned so that the straight segment line is parallel to the vertical, such that the outline of the segment forms the letter "D".

U.S. Patent No. 6,884,292 and U.S. Patent Application Publication No. 2005/0208212 discuss methods for applying a coating to optical lenses via dipcoating. U.S. Patent No. 6,077,569 describes a coating method for a plastic lens substrate via plasma ion beam deposition and bombarding with energetic atoms.

Accordingly, an efficient and effective coating technique for lenses having a non-uniform surface profile, in particular, for segmented multifocal (e.g., bifocal or trifocal) lenses, is highly desirable.

### SUMMARY OF THE INVENTION

It is an object of the present invention to provide an improved coating technique for lenses having non-uniform or irregular surface profiles.

It is a further object of the invention to provide an improved coating technique for multifocal segmented lenses, namely, straight top multifocal lenses.

According to an aspect of the present invention, a method for providing an optically uniform coating to an optical non-uniform surface profile of an ophthalmic lens is provided comprising the steps of providing the lens having a straight edge in a first orientation relative to at least one stationary ultrasonic spray nozzle, and positioning the nozzle a predetermined height above the optical surface of the lens. The lens is moved at a predetermined speed in a direction towards the nozzle and a coating composition is simultaneously applied in atomized form during traveling of the lens surface beneath the nozzle. The first orientation comprises characterized in that a length of the straight edge is substantially perpendicular to the direction of travel of the lens towards the nozzle.

According to another aspect of the present invention, a method for coating a segmented straight top ophthalmic lens is provided comprising the steps of providing the straight top lens having a straight edge in a first orientation relative to at least one stationary ultrasonic spray nozzle, and applying a coating material in atomized form during traveling of the lens surface beneath the nozzle, the first orientation comprising a length of the straight edge being substantially perpendicular to the direction of travel of the lens.

These and other aspects, features and advantages of the present invention will be described or become apparent from the following detailed description of the preferred embodiments, which is to be read in connection with the accompanying drawings.

### BRIEF DESCRIPTION OF THE DRAWINGS

The advantages, nature, and various additional features of the invention will appear more fully upon consideration of the illustrative embodiments now to be described in detail in connection with accompanying drawings. In the drawings characterized in that like reference numerals denote similar components throughout the views:
FIG. 1 is an exemplary illustration of an apparatus setup of a segmented lens coating system, according to an embodiment of the present invention.
FIG. 2 is a schematic view of a segmented optical lens positioned for a coating process according to an aspect of the present invention;
FIG. 3 is an exemplary side perspective view of a segmented optical lens positioned for a coating process according to an aspect of the present invention; and
FIG. 4 is an exemplary flow diagram of a method for coating a segmented lens according to an aspect of the present invention.

### DETAILED DESCRIPTION OF PREFERRED EMBODIMENTS

The present invention provides a system and method for coating optical lenses having inherently uneven, non-uniform surface topographies (e.g., segmented multifocal lenses) which achieves improved optical uniformity and evenness in coating distribution. According to an aspect of the present invention, a coating composition may be uniformly and precisely applied to, e.g., a segmented multifocal lens having a raised portion, with minimal to non-existent coating buildup and/or bubbling at ridges, and with minimal coating waste. Advantageously, these features may be achieved despite the challenging mechanical properties presented by segmented lenses having non-uniform surface profiles and the resultant difficulty in uniformly coating same. Namely, the objectives of the present invention are achieved through a novel lens positioning and coating methodology described herein with reference to the Figures.

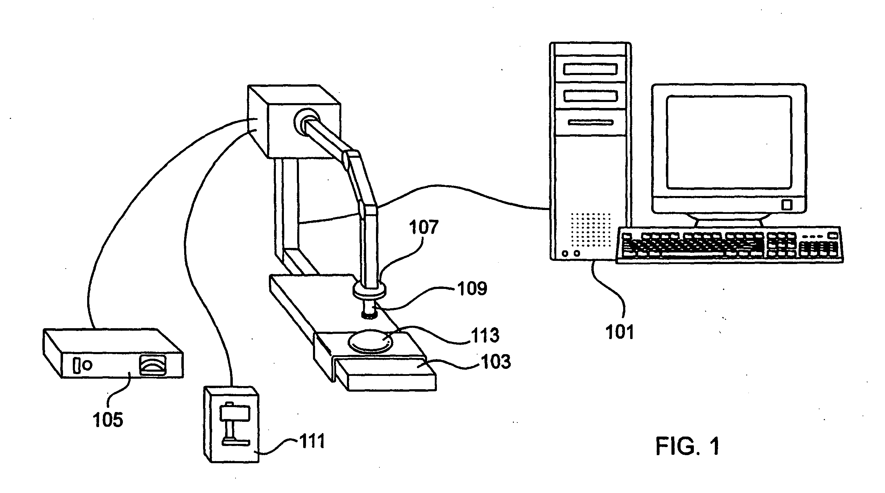

Referring now to the Figures, FIG. 1 is an exemplary illustration of an apparatus setup suitable for practice of the present invention, according to an embodiment of the present invention. A guide rod 103 (robotic cylinder) with spray device 107 is provided operably connected to a system controller 101 and power supply 105. The system controller 101 may comprise, e.g., a computer and may include various system components, e.g., a central processing unit, a monitor, a mouse, keyboard, etc. A lens 113 is positioned on the guide rod 103, with the lens surface to be coated facing upwards. A liquid feed device or syringe pump 111 is connected to spray device 107 for providing a continuous supply of coating composition to be applied onto at least one optical surface of the lens.

Spray device 107 preferably comprises an ultrasonic atomizer, and includes an ultrasonic spray nozzle 109 through which an atomized liquid coating composition is projected.

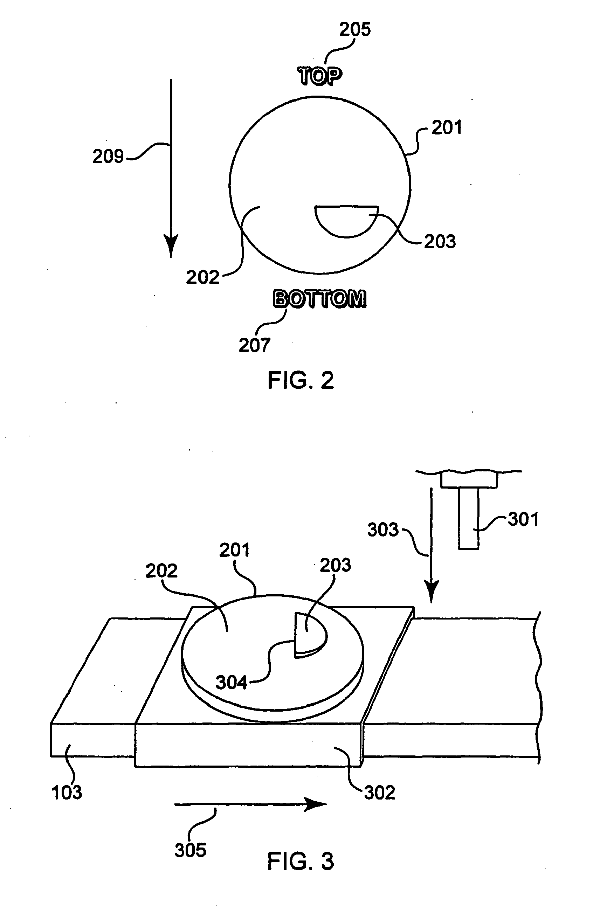

FIG. 2 is a schematic view of a segmented optical lens positioned for a coating process according to an aspect of the present invention. Preferably, a segmented optical lens 201 to be coated according to an aspect of the present invention comprises a multifocal lens having a straight-top or D shaped segment 203. The lens 201 is oriented in a particular orientation (referred to as a "first orientation") for coating, e.g., such that an optical surface of a segmented lens to be coated is facing upwards and the curved portion of the segment 203 is facing towards the direction of movement, the lens 201 being moved in a direction 209 towards an ultrasonic spray nozzle. The nozzle (see FIG. 3) applies an atomized coating material onto the lens surface 202 from overhead. That is, the lens 201 is positioned so as to be caused to travel through the ejected atomized spray in a bottom 207 to top 205 direction.

FIG. 3 is an exemplary side perspective view of a segmented optical lens positioned for a coating process according to an aspect of the present invention. The segmented optical lens 201 is positioned on a tray 302, with the optical surface 202 to be coated ("coating surface") placed face-up. The nozzle 301 is positioned a predetermined height above the lens 201, e.g., such that the tip of nozzle 301 is preferably from about 40 mm to about 50 mm, and most preferably about 55 mm above the optical surface 202. In addition, a plane of the coating surface 202 is substantially perpendicular to the downwards direction 303 of a coating spray being ejected from nozzle 301.

Surprisingly, it was found that the positioning of a straight top lens 201 in a specific orientation ("first orientation") compounded with the specially adapted use of an ultrasonic atomizer produced unexpected and improved segmented lens coating results. Namely, the lens 201 is preferably oriented such that the straight line portion 304 of the segment 203 is substantially perpendicular to the direction of movement 305 of the lens 201 towards nozzle 301. During coating application, the lens 201 is moved at a predetermined speed towards the nozzle 301, preferably from about 1 to about 3 mm/sec, and the coating composition is ejected from the nozzle 301 preferably at a predetermined flow rate, e.g., from about 1 to about 2 ml/min. During coating, the nozzle 301 is preferably held stationary (e.g., is mounted on a fixed mounting structure) as the lens 201 is caused to travel (e.g., via moving tray 302) at a predetermined speed beneath the spray.

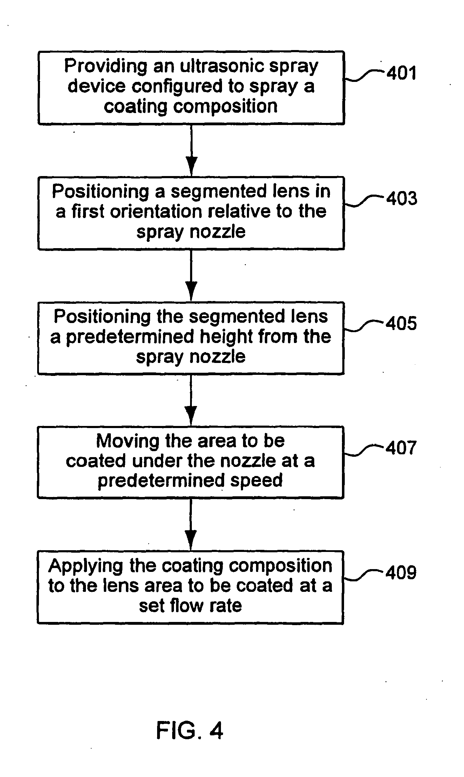

FIG. 4 is an exemplary flow diagram of a method for coating a segmented lens according to an aspect of the present invention. In step 401, an ultrasonic spray device is provided configured to spray a liquid coating composition in atomized form. Ultrasonic spray coating (atomization) technology is a process by which high frequency sound waves are utilized to produce an atomized spray liquid. For example, a metal diaphragm vibrating at an ultrasonic frequency may be employed to create atomized liquid droplets. The resultant droplets may be precisely targeted toward a surface to be coated.

An ultrasonic spray nozzle typically operates at a specific resonant frequency, determined primarily by the length of the nozzle. Both free ends of the nozzle should be anti-nodes (points of maximum vibrational amplitude). The nozzle produces standing, sinusoidal longitudinal waves. A critical amplitude is ultimately reached at which the height of the capillary waves exceeds that which is required to maintain their stability. The result is that the capillary waves collapse and tiny drops of liquid are ejected from the tops of the degenerating waves to the atomizing surface of the nozzle.

Ultrasonic atomization as employed according to an aspect of the present invention advantageously has been found to assist in imparting improved process control and precise, uniform thin film coatings for segmented lenses. Existing and known ultrasonic atomizers (e.g., ultrasonic spray devices used in the electronics industry, namely, devices having an ultrasonic spray nozzle including piezoelectric transducers, ground and active electrodes and an atomizing surface) may be utilized in the present invention. Various types of ultrasonic nozzles may be utilized, e.g., a Vortex^{™} nozzle, e.g., a Sono-Tek^{™} nozzle Model 8700-60 A2 (which sprays in about a 3.0" - 8.0" diameter conical pattern) or a widetrack nozzle, e.g., a Sono-Tek^{™} nozzle Model 8700-120 A2 (which provides up to about 24.0" of coverage). The power of the ultrasonic spray is preferably at a setting of 25 KHz to 120 KHz.

Representative exemplary coating compositions used according to the present invention may comprise any coating material desired to be imparted onto a polycarbonate lens (e.g., for imparting increased durability), such as, e.g., glycidoxypropyltrimethoxysilane based coatings, latex (polyurethane) coatings, polyphasic acrylic coatings, etc. A preferred viscosity range of a coating to be applied according to an aspect of the present invention is from about 1.0 mPa.s (1.0 cps) to about 10.0 mPa.s (10.0 cps), preferably from about 1.0 mPa.s (1.0 cps) to about 3.0 mPa.s (3.0 cps). Preferred coating compositions comprise coatings with solvents having a viscosity of about 2.0 mPa.s (2.0 cps).

In step 403, a multifocal segmented lens having an optical surface area desired to be coated is provided. Such a segmented lens may comprise bifocal, trifocal lens, etc., and namely, may comprise a lens having a straight-top or D-shaped segment which provides a different focal point from the rest of the lens. For example, the D-shaped segment may be reserved for near-vision correction, while the remaining lens area may assist in distance correction or have no power at all. The segmented lens is positioned in a particular orientation relative to the spray nozzle (a "first orientation"); for example, the lens 201 is preferably oriented such that the length of straight line edge 304 of the segment 203 is substantially perpendicular to the direction of movement 305 of the lens 201 along the guide rod 103.

A spray nozzle 301 is positioned overhead a predetermined height above the lens surface 202 to direct an atomized spray in a downwards direction 303 onto the lens 201 (step 405). The predetermined distance between the nozzle tip and lens surface may comprise, e.g., about 40 to about 60 mm, and preferably comprises about 55 mm. The plane of surface 202 is substantially perpendicular to the downwards direction 303 of the coating spray.

During coating application, the lens to be coated is moved along the rod 103 at a predetermined speed and passed under the stationary nozzle 301 while the coating composition is simultaneously ejected from the nozzle at a predetermined flow rate onto the area of the lens surface to be covered (steps 407, 409). The predetermined speed preferably comprises, e.g., about 1 to about 10 mm/sec, most preferably from about 5 to about 10 mm/sec. The predetermined flow rate preferably comprises, e.g., about 1 to about 2 ml/min.

It is to be noted that, e.g., coating flow rates as well as the power of the ultrasonic spray are parameters which may be adjusted as necessary depending, e.g., on the density and/or viscosity of coating material used. Further, one or more ultrasonic spray nozzles may be mounted in series during coating according to an aspect of the present invention. For example, multiple spray nozzles may be set up in parallel and/or may be set up in series to coat, e.g., in multiple passes over the same lens and/or for applying different coating materials.
Experimental data:
Representative data results are presented in the following Table 1.

**Table 1 - Ultrasonic Atomization Spray**

| peed (mm/sec) | 1 ml/min coating flow | | | 1.8 ml/min coating flow | | |
|---|---|---|---|---|---|---|
| | ront | iddle | ear | ront | iddle | ear |
| | 3.66 | 3.61 | 4.1 | 5.29 | 4.41 | 3.57 |
| 0 | 4.96 | 6.58 | .62 | 7.26 | 6.08 | 5.29 |
| 0 | 6.21 | 5.65 | 5.96 | 1.23 | .93 | .8 |
| 0 | 3.41 | 4.69 | .92 | 8.41 | 7.66 | 6.87 |
| 0 | .64 | .81 | .23 | 2.14 | 0.76 | 2.81 |
| 0 | .41 | .34 | .6 | 1.49 | 1.66 | 0.61 |
| 00 | .01 | .28 | .82 | .12 | .04 | .62 |

For optimal results and most satisfactory coverage of the segmented lens undergoing a coating process according to the present invention, in a preferred embodiment, the following parameters were used:
Flow rate: 2 ml/min
Height of lens from nozzle: 55 mm
Speed of lens travel: 5-10 mm/sec
Following ultrasonic spray application of coating material, the applied coating layer is cured via thermal and/or UV curing, etc. to obtain a coated lens.

Key advantages of the present invention include the capability to now provide significantly improved uniform coating of segmented lenses with minimal drip lines or bubbling at line edges in a most efficient manner, with minimal coating waste and overspray. The present invention provides such advantages while permitting flexibility in the types of coatings used and coating parameters employed. Moreover, the present invention enables the production of thicker hard coatings (e.g., coatings in excess of 3-20 µm) on segmented lenses with minimal drip lines and/or bubbling. Uniform thicker coatings may be achieved according to an aspect of the present invention via e.g., increasing the viscosity of the coating fluid, decreasing application speed, and/or running the lens through multiple passes.

Overall, the present invention provides, in one embodiment, a significantly improved coating process for segmented multifocal lenses, namely, the virtual elimination of coating defects, characterized by bubbling, drip lines, etc. at the segment line.

## Claims

1. A method for providing an optically uniform coating to an optical nonuniform surface profile (202) of an ophthalmic lens (201) comprising the steps of:
- providing (403) the lens (201) having a straight edge (304) in a first orientation relative to at least one stationary ultrasonic spray nozzle (301);
- applying (409) a coating composition in atomized form during traveling of the lens (201) surface beneath the nozzle (301), the first orientation comprising a length of the straight edge (304) being substantially perpendicular to the direction (305) of travel of the lens towards the nozzle (301).

2. The method according to claim 1, **characterized in that** the ophthalmic lens (201) is selected from a multifocal lens, a bifocal lens and a trifocal lens.

3. The method according to any of claims 1 or 2, **characterized in that** the ophthalmic lens (201) comprises a segmented straight top lens.

4. The method according to any of claims 1 to 3, **characterized in that** the step of traveling further comprises moving (407) the lens (201) at a predetermined speed in a direction towards the nozzle (301).

5. The method according to claim 4, **characterized in that** the predetermined speed comprises about 1 mm/sec to about 3 mm/sec.

6. The method according to any of claims 1 to 5, **characterized in that** it comprises the step of positioning (405) the nozzle (301) a predetermined height above the optical surface (202) of the lens (201).

7. The method according to claim 6, **characterized in that** the predetermined height comprises about 40 mm to about 60 mm.

8. The method according to any of claims 1 to 7, **characterized in that** the coating composition is applied via ejection of the composition from the nozzle (301) at a predetermined flow rate.

9. The method according to claim 8, **characterized in that** the predetermined flow rate comprises from about 1.0 to about 2.0 ml/min.

10. The method according to any of claims 8 or 9, **characterized in that** a plane of the optical surface (202) of the lens (201) is substantially perpendicular to a direction of the ejected atomized coating from the nozzle (301).

11. The method according to any of claims 1 to 10, **characterized in that** the coating composition comprises at least one of a glycidoxypropyltrimethoxysilane based coating, a latex-based coating and a polyphasic acrylic coating.

12. The method according to any of claims 1 to 11, **characterized in that** a viscosity range of the coating composition comprises about 1.0 mPa.s (1.0 cps) to about 10.0 mPa.s (10.0 cps).

13. The method according to claim 12, **characterized in that** a viscosity range of the coating composition comprises about 1.0 mPa.s (1.0 cps) to about 3.0 mPa.s (3.0 cps).

## Patentansprüche

1. Verfahren zum Bereitstellen einer optisch gleichförmigen Beschichtung an einem optischen ungleichförmigen Flächenprofil (202) einer ophthalmischen Linse (201), umfassend die Schritte:
- Bereitstellen (403) der Linse (201), aufweisend eine gerade Kante (304) in einer ersten Ausrichtung relativ zu zumindest einer stationären Ultraschallsprühdüse (301);
- Aufbringen (409) einer Beschichtungszusammensetzung in verdüster Form während einer Bewegung der Fläche der Linse (201) unter der Düse (301), wobei die erste Ausrichtung eine Länge der geraden Kante (304), im Wesentlichen senkrecht zur Bewegungsrichtung (305) der Linse hin zu der Düse (301), umfasst.

2. Verfahren nach Anspruch 1, **dadurch gekennzeichnet, dass** die ophthalmische Linse (201) ausgewählt ist unter einer multifokalen Linse, einer bifokalen Linse und einer trifokalen Linse.

3. Verfahren nach einem der Ansprüche 1 oder 2, **dadurch gekennzeichnet, dass** die ophthalmische Linse (201) eine segmentierte gerade Oberlinse umfasst.

4. Verfahren nach einem der Ansprüche 1 bis 3, **dadurch gekennzeichnet, dass** der Schritt des Bewegens ferner umfasst Bewegen (407) der Linse (201) bei einer vorbestimmten Geschwindigkeit in einer Richtung hin zu der Düse (301).

5. Verfahren nach Anspruch 4, **dadurch gekennzeichnet, dass** die vorbestimmte Geschwindigkeit enthalten ist zwischen etwa 1 mm/sec und etwa 3 mm/sec.

6. Verfahren nach einem der Ansprüche 1 bis 5, **dadurch gekennzeichnet, dass** es den Schritt des Positionierens (405) der Düse (301) bei einer vorbestimmten Höhe oberhalb der optischen Fläche (202) der Linse (201) umfasst.

7. Verfahren nach Anspruch 6, **dadurch gekennzeichnet, dass** die vorbestimmte Höhe enthalten ist zwischen etwa 40 mm und etwa 60 mm.

8. Verfahren nach einem der Ansprüche 1 bis 7, **dadurch gekennzeichnet, dass** die Beschichtungszusammensetzung aufgebracht wird mittels Ejektion der Zusammensetzung von der Düse (301) bei einer vorbestimmten Flussrate.

9. Verfahren nach Anspruch 8, **dadurch gekennzeichnet, dass** die vorbestimmte Flussrate enthalten ist zwischen etwa 1,0 und etwa 2,0 ml/min.

10. Verfahren nach einem der Ansprüche 8 oder 9, **dadurch gekennzeichnet, dass** die Ebene der optischen Fläche (202) der Linse (201) im Wesentlichen senkrecht zur Richtung der Ejektion verdüster oder zerstäubter Beschichtung von der Düse (301) ist.

11. Verfahren nach einem der Ansprüche 1 bis 10, **dadurch gekennzeichnet, dass** die Beschichtungszusammensetzung zumindest eine umfasst von Glycidoxypropyltrimethoxysilan basierter Beschichtung, Latex basierter Beschichtung und einer polyphasisch akrylischen Beschichtung.

12. Verfahren nach einem der Ansprüche 1 bis 11, **dadurch gekennzeichnet, dass** die Viskosität der Beschichtungszusammensetzung in einem Bereich enthalten ist von etwa 1,0 mPa.s (1,0 cps) bis etwa 10,0 mPa.s (10,0 cps).

13. Verfahren nach Anspruch 12, **dadurch gekennzeichnet, dass** der Viskositätsbereich der Beschichtungszusammensetzung enthalten ist zwischen etwa 1,0 mPa.s (1,0 cps) bis etwa 3,0 mPa.s (3,0 cps).

## Revendications

1. Procédé pour fournir un revêtement optiquement uniforme sur un profil de surface optique non uniforme (202) d'une lentille ophtalmique (201), comprenant les étapes de :
- fournir (403) la lentille (201) ayant un bord droit (304) dans une première orientation par rapport à au moins une buse de pulvérisation ultra-sonore stationnaire (301) ;
- appliquer (409) une composition de revêtement sous forme atomisée pendant un déplacement de la surface de la lentille (201) en dessous de la buse (301), la première orientation comportant qu'une longueur du bord droit (304) est sensiblement perpendiculaire à la direction (305) de déplacement de la lentille vers la buse (301).

2. Procédé selon la revendication 1, **caractérisé en ce que** la lentille ophtalmique (201) est choisie parmi une lentille multifocale, une lentille bifocale et une lentille trifocale.

3. Procédé selon l'une quelconque des revendications 1 et 2, **caractérisé en ce que** la lentille ophtalmique (201) comporte une lentille à partie supérieure droite segmentée.

4. Procédé selon l'une quelconque des revendications 1 à 3, **caractérisé en ce que** l'étape de déplacement comporte en outre le mouvement (407) de la lentille (201) à une vitesse prédéterminée dans la direction de la buse (301).

5. Procédé selon la revendication 4, **caractérisé en ce que** la vitesse prédéterminée est d'environ 1 mm/s à environ 3 mm/s.

6. Procédé selon l'une quelconque des revendications 1 à 5, **caractérisé en ce qu'**il comporte l'étape de positionnement (405) de la buse (301) à une hauteur prédéterminée au-dessus de la surface optique (202) de la lentille (201).

7. Procédé selon la revendication 6, **caractérisé en ce que** la hauteur prédéterminée est d'environ 40 mm à environ 60 mm.

8. Procédé selon l'une quelconque des revendications 1 à 7, **caractérisé en ce que** la composition de revêtement est appliquée par éjection de la composition par la buse (301) à un débit prédéterminé.

9. Procédé selon la revendication 8, **caractérisé en ce que** le débit prédéterminé est d'environ 1,0 à environ 2,0 ml/mn.

10. Procédé selon l'une quelconque des revendications 8 et 9, **caractérisé en ce qu'**un plan de la surface optique (202) de la lentille (201) est sensiblement perpendiculaire à une direction du revêtement atomisé éjecté par la buse (301).

11. Procédé selon l'une quelconque des revendications 1 à 10, **caractérisé en ce que** la composition de revêtement comprend au moins l'un d'un revêtement à base de glycidoxypropyltriméthoxysilane, d'un revêtement à base de latex et d'un revêtement acrylique polyphasique.

12. Procédé selon l'une quelconque des revendications 1 à 11, **caractérisé en ce qu'**une gamme de viscosité de la composition est d'environ 1,0 mPa.s (1,0 cps) à environ 10,0 mPa.s (10,0 cps).

13. Procédé selon la revendication 12, **caractérisé en ce qu'**une gamme de viscosité de la composition de revêtement est d'environ 1,0 mPa.s (1,0 cps) à environ 3,0 mPa.s (3,0 cps).
